# EUROPÄISCHE PATENTANMELDUNG

(11) **EP 3 038 222 A1**
(43) Veröffentlichungstag der Anmeldung: **29.06.2016**
(21) Anmeldenummer: 15202673.8
(22) Anmeldetag: 24.12.2015
(51) Int. Cl.: H02G 5/06, H02G 5/00

(54) **STROMSCHIENENSYSTEM MIT STROMSCHIENEN UND GEBÄUDEINSTALLATION**

(30) Priorität: 24.12.2014 EP 14200326; 31.07.2015 EP 15179399
(71) Anmelder: Zurecon AG, 9053 Teufen AR (CH)
(72) Erfinder: PFLUGER, Gerd, 4625 Oberbuchsiten (CH)
(74) Vertreter: Rutz & Partner

(57) **Zusammenfassung**

Das der Energieverteilung dienende Stromschienensystem (100) umfasst wenigstens eine erste und eine zweite Stromschiene (1, 1 ') mit in einen Stromschienenkörper (10) eingebetteten Leitungsstäben (11), die von einem ersten Anschlussbereich (A) an einem ersten Endstück (1A) der Stromschiene (1, 1') zu wenigstens einem zweiten Anschlussbereich (B) an einem zweiten Endstück (1B) der Stromschiene (1) geführt und endseitig mit Anschlüssen (11A, 11B) versehen sind. Erfindungsgemäss sind die beiden Stromschienen (1, 1') durch eine Stromschienenkupplung (9) miteinander verbunden, die wenigstens einen deformierbaren elektrischen Leiter (110) aufweist, durch den die Anschlüsse (11A, 11B) der einander zugewandten Stromschienen (1, 1`) derart miteinander verbunden sind, dass Temperaturdehnungen der Stromschienen (1, 1`) kompensierbar sind. Das Stromschienensystem (100) kann vorteilhaft in Leitungsschächten (80) von Gebäuden (8) installiert werden.

## Beschreibung

Die Erfindung betrifft ein Stromschienensystem mit Stromschienen zur Energieverteilung in einem Gebäude sowie eine Gebäudeinstallation mit einem solchen Stromschienensystem.

Für die Übertragung von Strom mit hoher Leistung, hoher Sicherheit und Zuverlässigkeit werden Stromschienen als Übertragungsleitungen zwischen Transformatoren, Haupt- und Unterverteilern in Fabrikhallen, Gewerbe- und Verwaltungsgebäuden oder auch als Steigleitungen in Hochbauten eingesetzt. Stromschienen und deren Verwendung sind z.B. in [1], Produktkatalog "Niederspannungs-Schienenverteiler LANZ HE 2.5.2" der LANZ OENSINGEN AG vom September 2009 beschrieben. Stromschienen dieser Art werden auch als Schienenverteiler bezeichnet.

[2], EP1928066A2, offenbart ein Verfahren zur Verbindung von Stromschienen, bei dem die Enden der elektrischen Leiter beider Stromschienenelemente miteinander verbunden und anschliessend vergossen werden.

Stromschienen sind ferner aus [3], Produktkatalog von Eta-com: "Cast Resin Insulated Busway System", 27.11.2014, bekannt.

Grundlagen der Berechnung von Stromschienen finden sich z.B. in [4], D. Nelles und Ch. Tuttas, Elektrische Energietechnik, Leitfaden der Elektrotechnik, Teubner Verlag, Stuttgart 1977, Seite 187.

Die Leitungsstäbe qualitativ hochwertiger Stromschienen sind in Giessharz oder Epoxyzement bzw. Polymerbeton eingegossen und erreichen dadurch den Schutzgrad IP68. In dieser Ausgestaltung werden die Stromschienen auf Erdbebensicherheit, Schocksicherheit und Funktionserhalt im Brandfall ausgelegt. D.h., weder elektrische, mechanische, thermische oder chemische Einwirkungen, insbesondere auch kein Druckwasser, können die Betriebssicherheit der Stromschienen gefährden. Mit den Stromschienen kann daher ein maximaler Sicherheitsstandard eingehalten werden. Ferner kann ein hoher Standard für den Funktionserhalt im Brandfall, wie F90, eingehalten werden. Oft werden Stromschienen mit einer Abschirmung versehen, mittels der niederfrequente magnetische Wechselfelder abgeschirmt und Normen der Serie EN 61000 eingehalten werden.

Gemäss [5], Marcel Schöb, »Power über Stromschiene oder Kabel?«, Wahl der geeigneten Energietransportverbindungen beim Bau von Industrieanlagen, Elektrotechnik 1/10, (http://www.elektrotechnik.ch), steigt der Energiebedarf in Industrieanlagen ständig an. Für Energieverteilnetze steht hingegen immer weniger Platz zur Verfügung. Leitungskanäle und Leitungsschächte werden ständig kleiner und werden zudem oft für mehrere Medien, insbesondere Elektrizität, Wasser, Abwasser und Gase sowie für Nachrichtenleitungen und Steuerleitungen benutzt.

Zur Verbindung der einzelnen Stromschienenbauteile mit den genannten elektrischen Vorrichtungen sind Anschlusselemente und Anschlusskupplungen verwendbar, wie sie in [1], Seite 5 oder in [6], EP2107659A1, beschrieben sind. Auf diese Weise kann eine Stromschienenleitung durch ein Gebäude verlegt werden. In Zonen des Gebäudes, in denen Verbraucher stehen, werden Abzweigungen vorgesehen, die auf unterschiedliche Arten realisierbar sind. An den Enden der Stromschienen werden üblicherweise Abschlussköpfe vorgesehen, bei denen die einzelnen Leitungsstäbe mit Anschlusslaschen oder Kabel verschraubt oder verschweisst werden und vorzugsweise vollständig eingegossen werden. Alternativ werden Anschlusskästen vorgesehen.

Aus [7], E-LINE MK Busbar Systems 100-160-225A, www.eae.com.tr, sind Anschlusskästen bekannt, bei denen Anschlusskontakte von Stromschienen mittels Federkontakten von Steckverbindungen kontaktiert werden. Die Anschlusskästen, die grosse "Steckverbinder" bilden, weisen ein Gehäuse auf, aus dem Anschlusskabel hinaus geführt werden. Beim Öffnen des Gehäusedeckels wird die Verbindung zwischen den Anschlusskabel und den Leitungsstäben der Stromschiene automatisch unterbrochen. Dazu sind an der Innenseite des Gehäusedeckels Kontaktmesser vorgesehen, die beim Schliessen des Gehäusedeckels in eine Kontaktbox hineingeführt werden, wodurch die elektrische Verbindung zwischen der Stromschiene und den Anschlusskabel resultiert, die vom Anschlusskasten weggeführt werden. Die Verbindung zwischen den Leitungsstäben der Stromschiene und den Anschlusskabeln erfolgt somit über mehrere seriell geschaltete Kontaktverbindungen.

Hinsichtlich der Betriebssicherheit des Energieverteilnetzes ist zu beachten, dass die Versorgungsstränge eines Stromschienensystems stets aus einzelnen Elementen bestehen, die normalerweise seriell miteinander elektrisch verbunden sind. Die Häufigkeit von Stromunterbrüchen und Störungen steigt proportional mit der Anzahl der Kopplungsstellen bzw. Kontaktstellen innerhalb des Energieverteilnetzes.

Es ist zudem zu beachten, dass das Energieverteilnetz äusseren Einflüssen ausgesetzt ist und dagegen geschützt werden muss. Insbesondere muss das Energieverteilnetz gegen Einwirkungen von Gasen, Feuchtigkeit, Wasser, Spritz- oder Druckwasser, Chemikalien, Feuer, und mechanische Einwirkungen, z.B. durch Erdbeben, geschützt werden. Obwohl Erdbeben in Mitteleuropa nur alle paar Jahre auftreten, müssen damit verbundene Schäden, die z.B. in chirurgischen Abteilungen oder in Datenverarbeitungsanlagen entstehen können, konsequent vermieden werden. Zu beachten ist weiter, dass Stromschienen auch Temperaturdehnungen unterworfen sind, die in einem Stromschienensystem zu kritischen Belastungen führen können.

Allgemein ist zu beachten, dass ein Energieversorgungsstrang stets so gut ist wie sein schwächstes Glied. Dies gilt für die Funktionsfähigkeit, aber auch für alle wichtigen Nebenfaktoren, wie die Einhaltung der Eigenschaften, die durch die Normen IP 68, F90 (Funktionserhalt im Brandfall) und EN 61000 (EMV- Verträglichkeit) gefordert sind.

In [8], E. Vinaricky, Elektrische Kontakte, Werkstoffe und Anwendungen: Grundlagen, Technologien, Prüfverfahren, Springer Verlag, 2. Auflage, März 2002 (siehe z.B. die Seiten 1-6), sind die Grundlagen von Kontaktverbindungen beschrieben. Darin wird zwischen einer scheinbaren Kontaktfläche, einer tragenden Kontaktfläche und einer wirksamen Kontaktfläche unterschieden. Unter der scheinbaren Kontaktfläche versteht man den Teil der zur Kontaktgabe bestimmten Fläche auf Kontaktstücken, an dem makroskopisch gesehen eine Berührung erfolgen kann. Die tragende Kontaktfläche ist der Teil der scheinbaren Kontaktfläche, der die Kontaktkraft tatsächlich aufnimmt. Die tragende Kontaktfläche umfasst die wirksame Kontaktfläche, durch die der Strom fliesst und die somit die Summe aller stromführungsfähigen Berührungsflächen darstellt. Da Oberflächen von Festkörpern im physikalischen Sinne stets rau sind, beschränkt sich die gegenseitige Berührung der Kontaktstücke auf mikroskopisch kleine Berührungsflächen. Weiterhin ist zu beachten, dass metallische Oberflächen in atmosphärischer Umgebung oft in Folge von Feuchtigkeit, Staub, Rauch und korrosiven Gasen von mehr oder weniger dicken Fremdschichten bedeckt werden.

Hinsichtlich der Betriebsqualität der Anschlusskästen ist besonders nachteilig, dass einerseits mehrere Kontaktverbindungen erforderlich sind, und dass diese Kontaktverbindungen andererseits geringe wirksame Kontaktflächen sowie verschleissanfällig Elemente aufweisen. In diesem Kontaktbereich kann daher nicht die Verbindungsqualität erreicht werden, welche für Stromschienen allein erzielbar wäre. Ein einheitlicher Sicherheits- und Qualitätsstandard kann zwischen den Anschlusspunkten der gesamten elektrischen Anlage, z.B. zwischen Anschlusspunkten eines Transformators einerseits und Klemmen eines Leistungsschalters andererseits, nicht oder nur mit sehr grossem Aufwand aufrechterhalten werden.

Mit Anschlusskästen lässt sich zudem der höchste Schutzgrad IP 68, insbesondere der Schutz gegen einwirkendes Druckwasser, kaum einhalten. D.h., bereits an den Schnittstellen der Stromschienen, die ausserhalb des Isolationskörpers der Stromschiene liegen, ist mit einem reduzierten Sicherheitsgrad zu rechnen. Hinsichtlich des Funktionserhalts im Brandfall liegen die Schwachstellen auch stets bei den Anschlusskästen, die relativ frühzeitig ausfallen.

Die Anschlusskästen sind zudem voluminös und weisen einen grösseren Querschnitt auf, als die Stromschienen selbst. Die Anschlusskästen nehmen daher viel Raum in Anspruch, was besonders nachteilig ist, da in Installationskanälen und Steigschächten kritische Raumverhältnissen vorliegen.

In Steigzonen von Gebäuden sind normalerweise Leitungsschächte vorgesehen, in denen die Stromschienen vertikal nach oben geführt werden. In diesen Leitungsschächten steht wenig Raum zur Verfügung, weshalb Montage und Wartung der Anschlusskästen erheblichen Aufwand verursachen.

Der vorliegenden Erfindung liegt daher die Aufgabe zugrunde, ein verbessertes Stromschienensystem mit Stromschienen zur Energieverteilung in einem Gebäude sowie eine Gebäudeinstallation mit einem solchen Stromschienensystem zu schaffen.

Insbesondere ist ein Stromschienensystem zu schaffen, das unter Wahrung eines einheitlich hohen Qualitätsstandards, z.B. Schutzgrad IP 68 und Brandsicherheit F90, mit reduziertem Aufwand und reduzierten Kosten erstellt werden kann.

Weiterhin soll die Wahrscheinlichkeit von Betriebsausfällen in Gebäudeeinheiten reduziert werden, in denen der sogenannte "Backbone", d.h. der Leitungsstamm des Energieversorgungssystems verläuft. Insbesondere sollen Betriebsausfälle auch dann verhindert oder zumindest verzögert werden, wenn weitere Gebäudesysteme versagen. Insbesondere soll der Funktionserhalt bei Wasserrohrbruch und im Brandfall gesichert werden.

In Leitungsschächten, z.B. in Steigzonen, in denen kritische Raumverhältnisse vorliegen und Wartungsarbeiten nur schwierig durchführbar sind, soll maximale Sicherheit gewährleistet werden. Ferner ist die Zugänglichkeit zu den Leitungen im Leitungsschacht bzw. ein möglichst grosser Sicherheitsabstand zu gewährleisten.

Das erfindungsgemässe Stromschienensystem soll auch dann einen sicheren Betrieb gewährleisten, wenn Temperaturschwankungen auftreten, die gegebenenfalls durch einen Brand verursacht werden. Ferner sollen Modifikationen und Erweiterungen des Energieverteilnetzes mit minimalem Aufwand und unter Wahrung des hohen Sicherheitsstandards der Installationen mit einfachen Massnahmen möglich sein. Weiterhin soll der Aufwand für Wartungsarbeiten reduziert werden, die rasch und bequem durchführbar sein sollen.

Gebäude sollen anhand der erfindungsgemässen Gebäudeinstallationen mit vereinfachten Leitungsschächten realisiert werden können, die reduzierte Abmessungen aufweisen und keine Servicetüren benötigen.

Diese Aufgabe wird mit einem Stromschienensystem zur Energieverteilung mit wenigstens einer ersten und einer zweiten Stromschiene sowie mit einer Gebäudeinstallation gelöst, welche die in Anspruch 1 bzw. 9 angegebenen Merkmale aufweisen. Vorteilhafte Ausgestaltungen der Erfindung sind in weiteren Ansprüchen angegeben.

Das der Energieverteilung dienende Stromschienensystem umfasst wenigstens eine erste und eine zweite Stromschiene mit in einen Stromschienenkörper eingebetteten Leitungsstäben, die von einem ersten Anschlussbereich an einem ersten Endstück der Stromschiene zu wenigstens einem zweiten Anschlussbereich an einem zweiten Endstück der Stromschiene geführt und endseitig mit Anschlüssen versehen sind.

Erfindungsgemäss sind die beiden Stromschienen durch eine Stromschienenkupplung miteinander verbunden, die wenigstens einen deformierbaren elektrischen Leiter aufweist, durch den die Anschlüsse der einander zugewandten Stromschienen derart miteinander verbunden sind, dass Temperaturdehnungen der Stromschienen kompensierbar sind. Das Stromschienensystem kann vorteilhaft in Leitungsschächten von Gebäuden installiert werden, um eine Gebäudeinstallation zu realisieren.

Die deformierbaren elektrischen Leiter sind vorzugsweise als elastische Metallbügel oder elastisches Metallband ausgebildet, das gegebenenfalls eine Laminatstruktur mit mehreren metallenen Lagen aufweist. Vorteilhaft können zur Fertigung der deformierbaren elektrischen Leiter Kupfer oder Aluminium verwendet werden.

Die Leitungsstäbe können im Anschlussbereich parallel zueinander verlaufen oder aufgefächert auseinanderlaufen, sodass Verbindungsmittel einfacher montierbar sind. Die Verbindung der deformierbaren elektrischen Leiter mit den Anschlüssen der Leitungsstäben erfolgt durch Verbindungsmittel, wie Schraubenverbindungen, Klemmverbindungen oder durch Schweissen, sodass hochwertige Verbindungen resultieren. Die Anschlüsse können unbearbeitete Endstücke der Leitungsstäbe sein oder zusätzlich mit Montageelementen, wie einem Gewinde, versehen sein. Die fertig gestellte Stromschienenkupplung wird vorzugsweise vergossen. Vorzugsweise wird eine elastische Gussmasse verwendet, die den Temperaturdehnungen der Stromschiene folgen kann. Vorteilhaft sind Gussmassen verwendbar, die zumindest teilweise aus Silikon bestehen.

In vorzugsweisen Ausgestaltungen sind die Leitungsstäbe U-förmig ausgebildet und ragen mit ihren Kontaktzonen vorzugsweise axial oder senkrecht zu den Endstücken aus dem Stromschienenkörper hervor.

Die Verbindungsstelle zwischen zwei Stromschienen wird vorzugsweise mittels einer Kopplungshülse überdeckt, die mit wenigstens einem der Endstücke verbunden ist. Vorzugsweise wird eine flexible Kopplungshülse in der Ausgestaltung eines Balgs aus Kunststoff oder Metall verwendet, welche die elektrisch und mechanisch miteinander verbundenen Endstücke der beiden Stromschienen umschliesst und beidseitig mit diesen verbunden ist und die Verbindungsstelle dadurch zuverlässig abdichtet.

Durch die dichte Verbindung der Kopplungshülse wenigstens mit der oberen ersten Stromschiene wird eine stabile Abschirmung der Stromschienenkupplung erzielt. Druckwasser, das in der Praxis meist von oben oder seitlich auf die Stromschiene einwirkt, wird daher über die Kopplungshülse abgeleitet und kann nicht in die Stromschienenkupplung eindringen.

Vorzugsweise ist die Kopplungshülse oben oder beidseitig mit Dichtungselementen, z.B. Dichtungsringen versehen, durch die die Kopplungshülse dicht abschliessend mit den Endstücken der Stromschiene verbunden wird. Vorteilhaft können die Endstücke der Stromschienen mit umlaufenden Nuten versehen werden, in die die Dichtungsringe hineingepresst werden, sodass die Nuten aufgefüllt werden.

Vorzugsweise wird zudem vorgesehen, dass die installierte Kopplungshülse mit einer elastischen Dichtungsmasse, vorzugsweise einer Silikonmasse zumindest teilweise gefüllt wird.

In besonders bevorzugten Ausgestaltungen weist zumindest eine der Stromschienen ein drittes Endstück mit einem dritten Anschlussbereich auf, sodass dass ein Energieverteilsystem mit einem Leitungsstamm und wenigstens einem Leitungsast resultiert. Das dritte Endstück wird vorzugsweise nahe beim ersten oder zweiten Anschlussbereich angeordnet und bei der Installation durch einen Träger fixiert. Das freie Ende der Stromschiene kann sich daher denen, ohne dass sich das dritte Endstück verschiebt.

Innerhalb des Leitungsschachts verlaufen somit nur die Stromschienen mit den vollständig eingegossenen Leitungsstäben und Kupplungsvorrichtungen. Das Auftreten einer Betriebsstörung des elektrischen Systems innerhalb des Leitungsschachts kann daher praktisch ausgeschlossen werden. Die Installation der Stromschiene innerhalb des Leitungsschachts ist zudem weitestgehend immun gegenüber Störungen benachbarter Systeme, z.B. eines Wasserrohrbruchs innerhalb des Leitungsschachts oder gegen Feuer. Der Funktionserhalt der Energieversorgung innerhalb des Gebäudes bleibt auch im Katastrophenfall zumindest über die erforderliche Dauer gewährleistet.

Das erfindungsgemässe Stromschienensystem ist homogen ausgebildet und frei von Schwachstellen. Gewährleistet sind die uneingeschränkte Funktionsfähigkeit, aber auch zumindest die Einhaltung der Eigenschaften, die durch die Normen IP 68 (u.a. Schutz gegen Druckwasser), F90 (Funktionserhalt im Brandfall) und EN 61000 (EMV-Verträglichkeit) gefordert sind, bis zum elektrischen Verbraucher.

Bei einer Gebäudeinstallation in einem Gebäude, in dem ein der Aufnahme von Stromschienen dienender, vertikal ausgerichteter Leitungsschacht vorgesehen ist, wird das Stromschienensystem derart installiert, dass die dritten Endstücke der Stromschienen je durch eine Maueröffnung in einer Schachtwand und/oder Gebäudewand in einen vom Leitungsschacht getrennten Raum des Gebäudes zu einem Energieabnehmer oder Energieverteiler geführt sind.

Damit die in die Gebäuderäume geführten dritten Endstücke der Stromschienen auch bei auftretenden Temperaturänderungen stabil gehalten sind, werden diese innerhalb des Leitungsschachts vorzugsweise je von einer montierten Stütze, z.B. einem Metallausleger, oder einem Element der Schachtmauer auf konstanter Höhe fest gehalten.

Während die in die Gebäuderäume geführten Endstücke der Stromschienen stabil gehalten werden, können sich die freien Enden der Stromschienen bzw. die über die deformierbaren elektrischen Leiter mit der benachbarten Stromschiene verbundenen Endstücke der Stromschienen unter Temperatureinfluss um das erforderliche Mass entlang dem Leitungsschacht dehnen. Auf diese Weise werden Krafteinwirkungen auf die miteinander verbundenen Stromschienen und entsprechende Verschiebungen oder Verdrehungen der dritten Endstücke vermieden. Die in die Gebäuderäume geführten dritten Endstücke bleiben daher stets präzise ausgerichtet und stabil gehalten, was besonders in mehrgeschossigen Bauten von grösster Wichtigkeit ist.

Aufgrund der Fertigung der Stromschienen im Werk und der Verbindung der Stromschienen mittels Schrauben und Vergiessen auf der Baustelle weist die Gebäudeinstallation bzw. das Stromschienensystem bis in die Räume des Gebäudes hinein die höchste Verbindungsqualität. Auf diese Weise können Störungen praktisch eliminiert werden. Ferner können Verluste aufgrund von Übergangswiderständen vermieden werden, die z.B. bei Anschlusskästen nicht selten auftreten. Die Gebäudeinstallation weist daher eine hohe Verbindungsqualität und eine weitgehende Immunität gegen äussere Einflüsse auf.

Die Abmessungen der Stromschiene werden bedarfsweise gewählt. Der auf konstanter Höhe gehaltenen Leitungsast bzw. das dritte Endstück wird vorzugsweise exzentrisch auf der Höhe eines der Anschlussbereiche des Leitungsstamms angeordnet, sodass sich praktisch die gesamte Stromschiene beliebig dehnen kann. Das dritte Endstück kann aber auch zwischen den ersten beiden Anschlussbereichen angeordnet sein. Die Leitungsäste können ungleiche Längen aufweisen und auch länger oder kürzer als der Leitungsstamm sein. Jede Stromschiene weist vorzugsweise eine Länge auf, die der Höhe einer Etage entspricht. Gegebenenfalls wird diese Stromschiene auf der Baustelle aus mehreren Einheiten zusammengeschraubt. Auf diese Weise kann für jede Etage eine erfindungsgemässe Stromschiene vorgesehen werden.

Innerhalb der Gebäuderäume werden die Leitungsstäbe der dritten Endstücke vorzugsweise direkt mit Anschlusskabel verbunden. Dazu werden die Anschlusskabel mit den Leitungsstäben des Leitungsasts vorzugsweise unlösbar verbunden, vorzugsweise verschraubt, und mit dem Stromschienenkörper vergossen. Dadurch wird die hohe Qualität des Stromschienensystems auch innerhalb der Gebäuderäume bis zu einem Energieabnehmer, wie einem Etagenverteiler, Hauptverteiler, Unterverteiler oder Leitungsschalter, gewährleistet.

Nachfolgend wird die Erfindung anhand von Zeichnungen näher erläutert. Dabei zeigt:
- Fig. 1: eine bekannte Stromschiene 1" mit fünf in einem Isolationskörper 10 eingebetteten Leitungsstäben 11, die in Endstücken 1A, 1B zu einem ersten und einem zweiten Anschlussbereich A, B geführt sind und dort unbearbeitete Anschlüsse 11A, 11B aufweisen;
- Fig. 2: eine Stromschiene 1'" mit fünf in einem Isolationskörper 10 eingegossenen Leitungsstäben 11, die innerhalb eines entlang einer Längsachse x ausgerichteten Leitungsstamms 18 zu zwei ersten Endstücken 1A, 1B mit Anschlussbereichen A, B und entlang einer Querachse y in einem senkrecht dazu ausgerichteten Leitungsast 19 zu einem dritten Endstück 1C mit einem Anschlussbereich C verlaufen;
- Fig. 3: ein erfindungsgemässes Stromschienensystem 100 für die Energieverteilung in einem Gebäude 8 bzw. eine Gebäudeinstallation 1000 mit mehreren Stromschienen 1, die durch elastische Stromschienenkupplungen 9 miteinander verbunden sind und die je drei Endstücke 1A, 1B, 1C aufweisen, die einen in einem Leitungsschacht 80 geführten Leitungsstamm 18 und Leitungsäste 19 bilden, die durch Maueröffnungen 820 hindurch je in eine Gebäudeetage 831, ..., 834 geführt werden;
- Fig. 4: ein Teil des Stromschienensystems 100 von Fig. 3 mit elastisch miteinander verbundenen Stromschienen 1, 1', die je mit den zwei ersten Endstücken 1A, 1B ein U-Profil bilden und die dritte Endstücke 1C aufweisen, die durch Öffnungen 820 in der Mauer oder Schachtwand 82 hindurch geführt sind;
- Fig. 5: eine erfindungsgemässe Gebäudeinstallation 1000 mit elastisch miteinander verbundenen Stromschienen 1, 1", die Endstücke 1A, 1B aufweisen, die linear zueinander ausgerichtet sind und aus denen die Anschlussenden U-profilförmiger Leitungsstäbe 11 seitlich hervortreten;
- Fig. 6a: eine Stromschienenkupplung 9 mit deformierbaren, gegebenenfalls federelastischen elektrischen Leitern 110, durch die die Leitungsstäbe 110 benachbarter Anschlussbereiche A, B der Stromschienen 1, 1' von Fig. 5a miteinander verbunden sind;
- Fig. 6b: eine elastische Stromschienenkupplung 9, die in allen beschriebenen Stromschienensystemen 100 zum elastischen Verbinden von Stromschienen 1, 1' verwendbar ist;
- Fig. 7a: die Stromschienen 1, 1'mit gerade verlaufenden Leitungsstäben 11, deren zweite Anschlussbereiche A bzw. B durch bandförmige elektrische Leiter 110 miteinander verbunden sind;
- Fig. 7b: die Stromschienen 1, 1' von Fig. 7a mit einer Kopplungshülse 90 in der Ausgestaltung eines elastischen Balgs, durch den die Stromschienenkupplung 9 dicht abgeschlossen wird;
- Fig. 8a: eine Stromschiene 1 mit U-profilförmigen Leitungsstäben 11, die in den Anschlussbereichen A bzw. B zur Seite gebogen sind und seitlich aus dem Stromschienenkörper 10 hervortreten;
- Fig. 8b: den ersten und den fünften Leitungsstab 11 der Stromschiene 1 von Fig. 8a, die einstückig miteinander verbundene Anschlüsse 11A, 11B und 11C aufweist;
- Fig. 9a: zwei miteinander verbundene Stromschienen 1, 1' gemäss Fig. 8a, deren erste bzw. zweite Anschlüsse 11A, 11B, die gegeneinander gerichtet sind, miteinander sowie mit dritten Anschlüssen 11C verbunden sind;
- Fig. 9b: zwei miteinander verbundene Stromschienen 1, 1' gemäss Fig. 8a, deren erste bzw. zweite Anschlüsse 11A, 11B, die parallel zueinander ausgerichtet sind, miteinander sowie mit dritten Anschlüssen 11C verbunden sind;
- Fig. 10a: eine erfindungsgemässe Gebäudeinstallation 1000 mit fest miteinander verbundenen Stromschienen 1, 1', gemäss Fig. 8a;
- Fig. 10b: eine erfindungsgemässe Gebäudeinstallation 1000 mit elastisch miteinander verbundenen Stromschienen 1, 1', gemäss Fig. 8a;
- Fig. 11: eine erfindungsgemässe Stromschiene 1 mit vier Leitungsstäben 11, die unten und oben axial aus den Endstücken nach aussen treten und ausserhalb des Stromschienenkörpers 10 um 90° in dieselbe Richtung gebogen sind und in den Anschlussbereichen A und B parallel zueinander verlaufen; und
- Fig. 12: einen Teil des Stromschienensystems 100 von Fig. 3 mit zwei je an einer Maueröffnung 820 anliegenden Mauerdichtungen 6, die wenigstens zwei gegeneinander verschiebbare erste und zweite Dichtungsplatten 61, 62 aufweisen, durch die aus dem Leitungsschacht 80 hinaus geführte Teile 1C des Stromschienensystems 100 dicht abgeschlossen hindurchgeführt und vertikal verschiebbar sind, um Temperaturdehnungen der Stromschienen 1, 1' zu folgen.

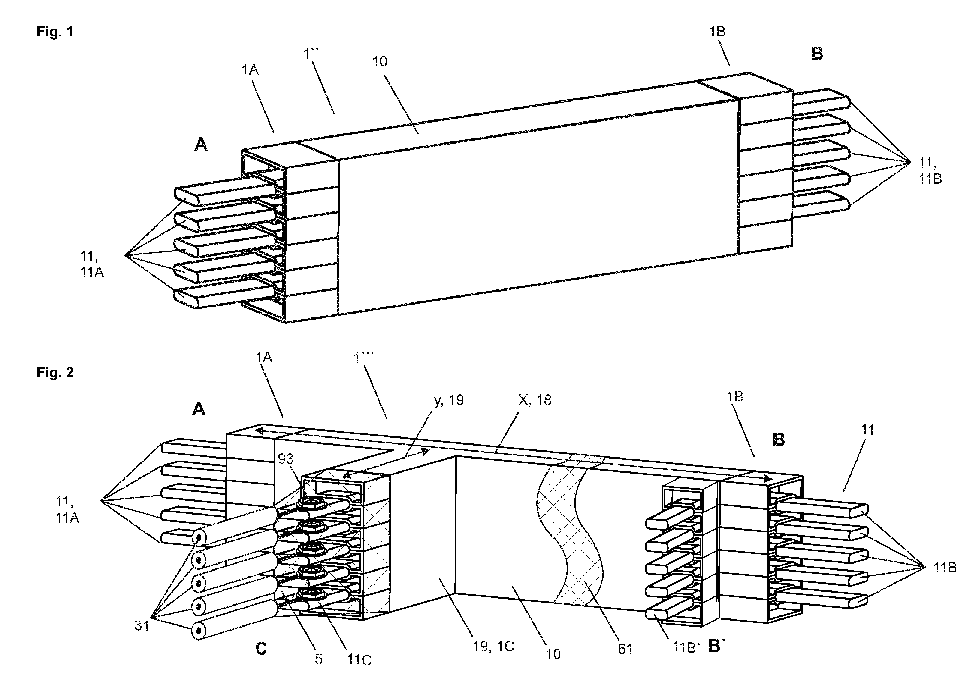

Fig. 1 zeigt eine bekannte Stromschiene 1" mit fünf in einem Isolationskörper 10 eingegossenen Leitungsstäben 11, die durch zwei Endstücke 1A, 1B zu je einem Anschlussbereich A, B verlaufen und dort unbearbeitete Anschlüsse 11A, 11B bilden.
Fig. 2 zeigt eine Stromschiene 1'" mit fünf in einem Isolationskörper 10 eingegossenen Leitungsstäben 11, die innerhalb eines entlang einer Längsachse y ausgerichteten Leitungsstamms 18 zwischen einem ersten und einem zweiten Endstück 1A, 1B mit Anschlussbereichen A und B und in einem senkrecht dazu ausgerichteten Leitungsast 19 zu einem dritten Endstück 1C mit einem Anschlussbereich C verlaufen. Die Leitungsstäbe 11 des Leitungsstamms 18 und des daran anschliessenden Leitungsasts 19 sind in einem gemeinsamen Stromschienenkörper 10, vorzugsweise in einem Isolationskörper aus Isolationsmaterial, wie Giessharz oder Polymerbeton, eingegossen. Die Leitungsstäbe 11 des Leitungsstamms 18 und des Leitungsasts 19 sind entweder einstückig ausgebildet, miteinander verschweisst oder miteinander verschraubt. Die Stromschiene 1'" weist daher über den gesamten Bereich bis zu jeder Extremität dieselbe hohe Qualität auf.

Am zweiten Endstück 1B sind zwei Anschlussbereiche B und B' vorgesehen, an denen Anschlüsse 11B, 11B` der Leitungsstäbe 11 parallel und senkrecht zur Stromschienenachse x aus dem Stromschienenkörper 10 austreten. Z.B. ist es auch möglich Blindanschlüsse vorzusehen, die nach der Installation bei Bedarf genutzt werden können.

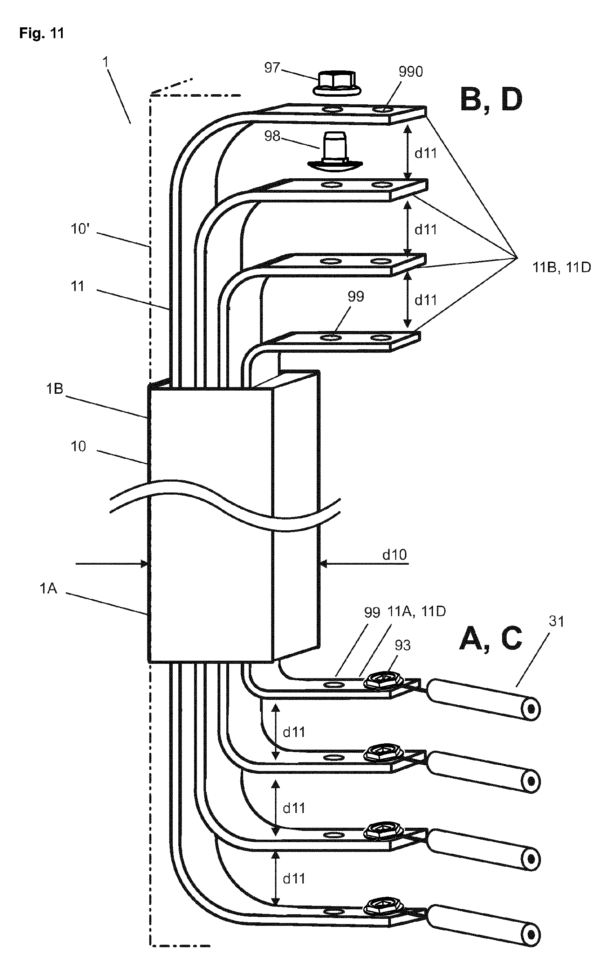

Vom Leitungsstamm 18 der Stromschienen 1 wird ein Leitungsast 19 weggeführt. Dieser Leitungsast 19 kann vorteilhaft aus dem Leitungsschacht hinaus in einen Gebäuderaum geführt werden. Dort sind die Anschlüsse 11C der Leitungsstäbe 11 des Leitungsasts 19 mit Endstücken von Anschlussleitungen 31, ..., 35 verbunden. Die Endstücke der Anschlussleitungen 31, ..., 35 werden mit den Leitungsstäben 11, ..., 15 verschweisst oder, wie gezeigt, mittels Schrauben 93 verschraubt und vergossen, wodurch ein Abschlusskopf 5 gebildet wird. Zur Aufnahme der Schrauben 93 können die Anschlüsse 11C mit Bohrungen 990 versehen werden, die z.B. ein Gewinde aufweisen (siehe Fig. 11).

Der Leitungsstamm 18 kann auf wenigstens einer Seite mit einer oder mehreren Leitungsästen bzw. Anschlussbereichen versehen sein. Die Stromschienen 1'" können daher bedarfsweise an jede Struktur eines Gebäudes und eines Leitungsschachts angepasst werden können.

Fig. 2 zeigt ferner, dass der Isolationskörper 10 der Stromschiene 1'" mit einer Abschirmung 61 versehen werden kann, die durch elektrische Ströme verursachte Magnetfelder nach aussen abschirmt, sodass keinerlei störende Auswirkungen auf den Anwender oder elektrische Geräte verbleiben. Z.B. wird die Stromschiene 1'" mit einem Mantel aus einem Spezialblech oder einer Spezialfolie versehen. Vorzugsweise werden Spezialfolien in der Art verwendet, die unter den Bezeichnungen MUMETALL, VITROVAC, VITROPERM bekannt sind. Alternativ werden Abschirmungen verwendet, die aus Nickel-Eisen-Legierungen oder Kobalt-Eisen-Legierungen bestehen. Durch die beschriebene Abschirmung für alle Stromschienen 1, 1', 1", 1'" des Stromschienensystems 100 gelingt somit eine vollständige Abschirmung der Energieverteilungsvorrichtung bis zu den Verbrauchern. Entsprechende Vorschriften, wie EMV-Vorschriften, werden daher stets eingehalten. Vorzugsweise werden auch die Stromschienenkupplungen 9 mit Abschirmungen versehen.

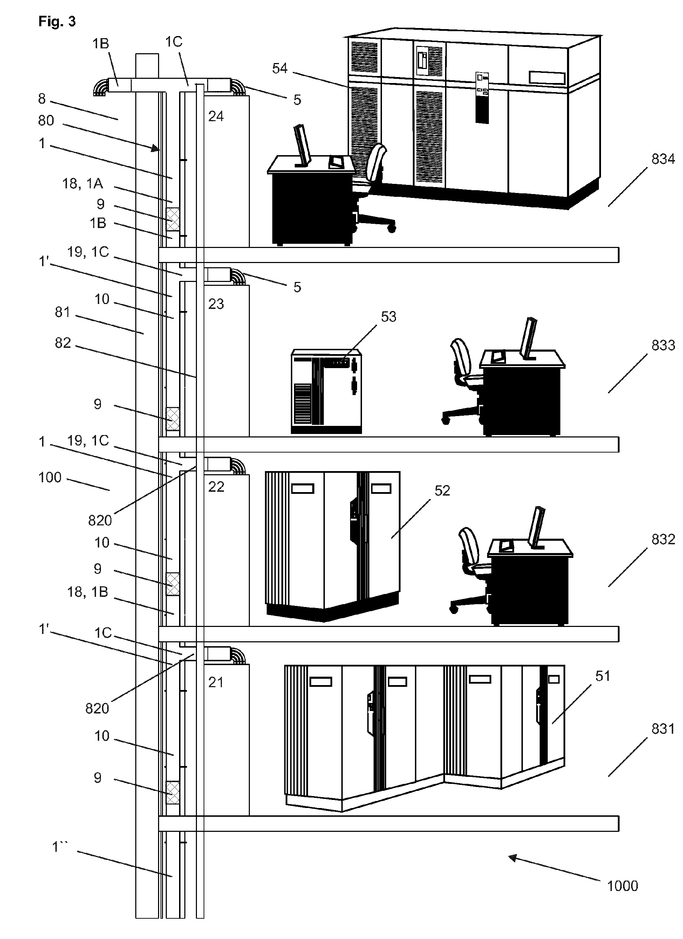

Fig. 3 zeigt eine Gebäudeinstallation 1000 mit einem erfindungsgemässen Stromschienensystem 100 für die Energieverteilung in einem Gebäude 8, das mehrere Etagen 831, 832, 833, 834 aufweist, in denen elektrische Geräte 51, 52, 53, 54 je an einen zugehörigen Energieabnehmer, z.B. einen Energieverteiler, Unterverteiler oder Leistungsschalter 21, 22, 23, 24 angeschlossen sind.

Das Stromschienensystem 100 umfasst vier Stromschienen 1, 1' und eine konventionelle Stromschiene 1", die in einem Leitungsschacht 80 koaxial und vertikal nach oben geführt sind. Der Leitungsschacht 80 ist angrenzend an eine Aussenwand 81 des Gebäudes 8 vorgesehen und durch eine Schachtwand 82 innerhalb des Gebäudes 8 weiter begrenzt. Die Schachtwand 82 bildet gleichzeitig eine Gebäudeinnenwand und ist mit Maueröffnungen 820 versehen, die je einen Zugang zu einer zugehörigen Gebäudeetage 831, ..., 834 schaffen.

Die Stromschienen 1, 1' bilden einen im Leitungsschacht 80 vertikal nach oben geführten Leitungsstamm 18, von dem Leitungsäste 19 bzw. dritte Endstücke der Stromschienen 1, 1' durch die Maueröffnungen 820 hindurch je in eine der Gebäudeetagen 831, ..., 834 geführt werden. Die konventionelle Stromschiene 1" von Fig. 1 dient der Führung elektrischer Energie auf die Höhe der ersten Etage 831.

Zumindest zwei der Stromschienen 1, 1' sind vorzugsweise durch eine elastische Stromschienenkupplung 9 miteinander verbunden, die wenigstens einen deformierbaren elektrischen Leiter 110 aufweist, durch den die Anschlussbereiche A, B der einander zugewandten Endstücke 1A, 1B der beiden Stromschienen 1, 1' derart miteinander verbunden sind, dass auftretende Temperaturdehnungen der Stromschienen 1, 1' kompensiert werden.

Das Stromschienensystem 100 weist einen ersten Leitungsast 19 auf, der durch eine der Maueröffnung 820 hindurch zu einem Energieabnehmer 21 in der ersten Etage 831 geführt ist. Der Leitungsstamm 18 dieser Stromschiene 1 führt innerhalb des Leitungsschachts 80 weiter auf die Höhe der zweiten Etage 832 und ist dort mit der nachfolgenden Stromschiene 1 verbunden, die einen zweiten Leitungsast 19 aufweist, der durch eine Maueröffnung 820 zu einem Energieabnehmer 22 in der zweiten Etage 832 geführt ist. Diese Stromschiene 1 führt innerhalb des Leitungsschachts 80 weiter auf die Höhe der dritten Etage 833 und ist dort mit der nächsten Stromschiene 1' verbunden, die über einen dritten Leitungsast 19 mit einem Energieabnehmer 23 in der dritten Etage 833 und über den Leitungsstamm 18 und eine Stromschienenkupplung 9 mit der letzten erfindungsgemässen Stromschiene 1 verbunden ist. Diese letzte Stromschiene 1, die T-förmig ausgestaltet und ausgerichtet ist, entspricht der Stromschiene von Fig. 2, weist jedoch abweichende Abmessungen auf. Der relativ kurze Leitungsstamm 18 mit den beiden Endstücken 18A und 18B ist horizontal ausgerichtet, während der lange Leitungsast 19 vertikal in den Leitungsschacht 80 hineinragt und in die Stromschienenkupplung 9 hineingeführt ist. Das erste Endstück 18A führt zu einem Energieabnehmer 24 in der vierten Etage 834 und das zweite Endstück 18B führt zu einem weiteren hier nicht dargestellten Gebäudeteil oder in einen Raum auf der gegenüberliegenden Seite des Leitungsschachts 80.

Innerhalb des Leitungsschachts 80 befinden sich somit nur vergossene Stromschienen 1', 1 und vergossene Stromschienenkupplungen 9. Die an die Leitungsäste 19 bzw. dritten Endstücke 1C angeschlossenen Abschlussköpfe 5 sind ausserhalb des Leitungsschachts 80 angeordnet und sind vorzugsweise ebenfalls vergossen, sodass nur die isolierten Kabel 31, ..., 35 in die Energieabnehmer 21, 22, 23, 24 hineingeführt werden. Innerhalb des Leitungsschachts 80 ist daher der maximale Sicherheitsgrad, z.B. IP 68, gewährleistet. Mit Systemstörungen ist innerhalb des Leitungsschachts 80 auch dann nicht zu rechnen, falls ein Wasserrohrbruch auftreten sollte. Im Falle eines Feuers wird der maximal mögliche Funktionserhalt gewährleistet. Da keine Anschlusskästen, Anschlussstellen oder weitere Schwachstellen innerhalb des Leitungsschachts 80 vorhanden sind, können Störungen durch mangelhafte Kontaktierung, Oxidation, Wassereinbruch oder Feuer praktisch ausgeschlossen werden.

Durch die elastischen Stromschienenkupplungen 9 werden Temperaturdehnungen aufgefangen, sodass selbst im Brandfall keine störenden Kräfte auf das Stromschienensystem 100 einwirken. Die Leitungsäste 19 bzw. die dritten Endstücke 1C, die vorzugsweise auf einem Mauerstück oder einem Ausleger abgestützt sind, bleiben daher beim Auftreten von Temperaturdehnungen unbewegt, weshalb auf daran anschliessende Kontakte kein Zug oder Druck ausgeübt wird.

Sofern keine Erweiterung des Stromnetzes erforderlich ist, muss nach der Installation der Stromschienen 1 kaum mehr in den Leitungsschacht 80 eingegriffen werden. Das erfindungsgemässe Stromschienensystem 100 kann daher "ewig" eingemauert werden, sodass es einen festen Bestandteil des Gebäudes 8 bildet.

Nach der Installation der Stromschienen 1 können notwendige Wartungsarbeiten und Modifikationen bequem in den Gebäudeetagen 831, ..., 834 durchgeführt werden. Für Erweiterungen der Gebäudeinstallation 1000 werden gegebenenfalls Blindanschlüsse der Stromschienen 1 freigelegt und genutzt.

Das erfindungsgemässe Stromschienensystem 100 weist daher hinsichtlich der Montage, der Wartung, der späteren Erweiterung und insbesondere auch hinsichtlich der Gebäudestruktur und des Gebäudemanagements wesentliche Vorteile auf. Dem Architekten steht ein Bauteil zur Verfügung, welches vorteilhaft in das Gebäude integriert werden kann und dazu nur wenig Raum in Anspruch nimmt.

Das erfindungsgemässe Stromschienensystem 100 kann in unterschiedlichen Ausgestaltungen realisiert werden.

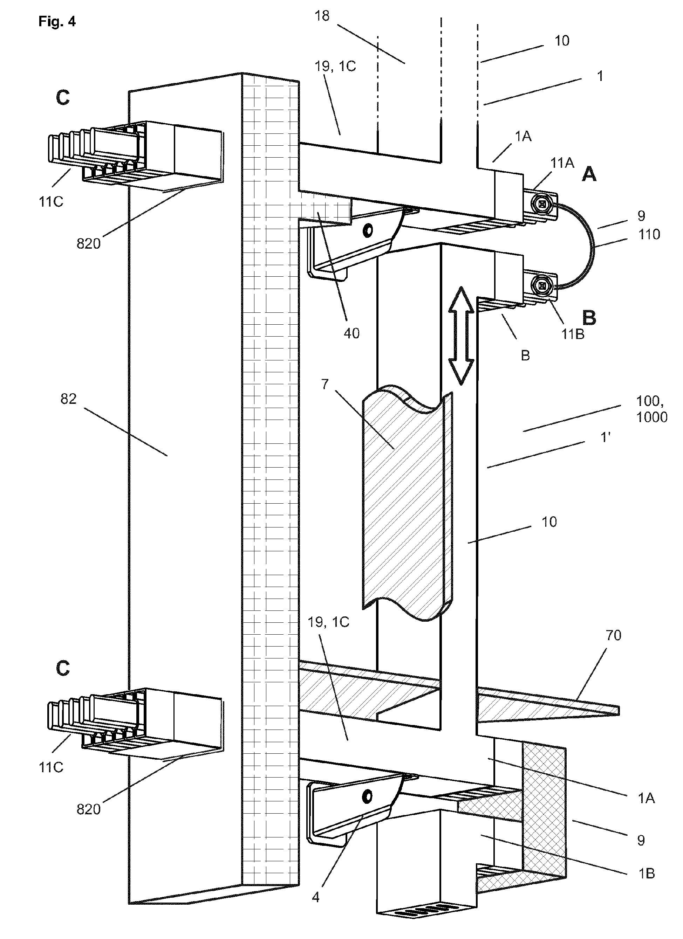

Fig. 4 zeigt ein Stromschienensystem 100 und eine Gebäudeinstallation 1000 in bevorzugter Ausgestaltung mit Stromschienen 1, 1', die durch elastische Stromschienenkupplungen 9 miteinander verbunden sind. Die Leitungsstäbe 11 zwischen den ersten beiden Anschlüssen A und B weisen in dieser Ausgestaltung ein U-Profil auf. Die ersten beiden Endstücke 1A, 1B der Stromschienen 1, 1' sind parallel zum dritten Endstück 1C ausgerichtet, das koaxial zum ersten Endstück 1A ausgerichtet und von einer metallenen Stütze 4 gehalten ist.

Die deformierbaren elektrischen Leiter 110 der Stromschienenkupplungen 9, welche die Leitungsstäbe 11 der benachbarten Endstücke 1A, 1B der Stromschienen 1, 1' miteinander verbinden, sind mit den Anschlüsse 11A, 11B verschraubt. Auf der Unterseite von Fig. 4 ist gezeigt, dass die Stromschienenkupplungen 9 in ein dehnbares Material eingegossen sind. Die gegeneinander gerichteten Endstücke 1A, 1B der beiden Stromschiene 1, 1' können sich daher relativ zueinander bewegen, wobei sich die Stromschienenkupplung 9 mit dem deformierbaren Leiter 110 und dem deformierbaren Gussmaterial entsprechend dehnen kann.

Bei dieser Ausgestaltung der Stromschienen 1, 1' gelingt es, den Leitungsstamm 18 nahe der Schachtmauer 82 zu verlegen und die Stromschienenkupplungen 9 bequem von der Rückseite zu montieren. Auf einen Eingriff zwischen die Stromschienen 1, 1' kann verzichtet werden.

Fig. 4 zeigt ferner, dass das Stromschienensystem 100 mittels wärmedämmendem und feuerfestem erstem Isolationsmaterial 7 isoliert ist. Ferner ist zur Brandabschottung ein zweites Isolationsmaterial 70 vorgesehen, durch das der Leitungsschacht 80 vorzugsweise auf der Höhe jeder Stromschiene 1, 1' in Brandabschnitte unterteilt ist. Durch die ersten und zweiten Isolationsmaterialien 7, 70 wird somit einerseits die Brandeinwirkung auf die einzelnen Stromschienen 1, 1' und andererseits die Brandausbreitung behindert.

Als Isolationsmaterialien 7, 70 werden z.B. feste oder flexible Platten oder Laminate verwendet, die an die Stromschienen 1, 1' und Stromschienenkupplungen 9 angepasst bzw. in den Leitungsschacht 80 eingepasst werden können. Vorzugsweise werden auch die Ausleger und Stützen 4 isoliert, damit sie im Brandfall nicht geschwächt werden.

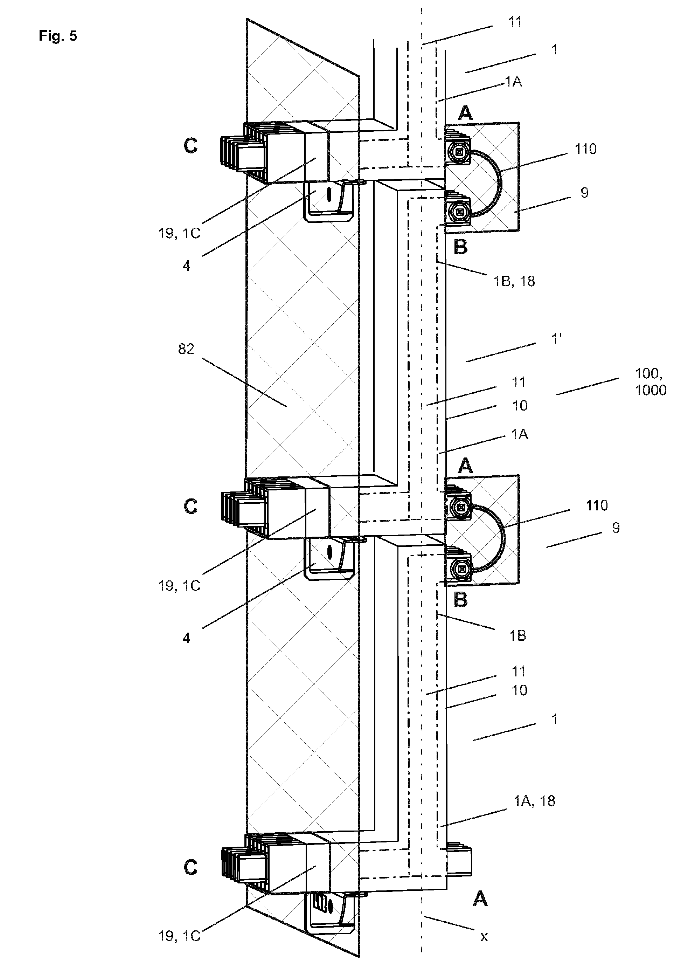

Fig. 5 zeigt eine weitere bevorzugte Ausgestaltung der Erfindung, bei der der Raumbedarf des Stromschienensystems 100 weiter reduziert ist. Dazu sind die ersten beiden Endstücke 1A, 1B des Stromschienenkörpers 10 axial ausgerichtet und nur die Enden der Leitungsstäbe 11 senkrecht zum Leitungsstamm 18 nach aussen geführt. Im Bereich der ersten beiden Endstücke 1A, 1B weisen die Leitungsstäbe 11 ein nach rechts geöffnetes U-Profil auf. Zusammen mit dem Leitungselement, welches zum dritten Anschlussbereich C führt, weisen die Leitungsstäbe 11 ein h-Profil auf. Die Leitungsstäbe 11 werden entsprechend vorgefertigt und können in einfacher Weise voneinander beanstandet gestapelt und vergossen werden.

Die Stromschienenkupplungen 9 können wieder bequem von der Rückseite her montiert werden, wobei mehr Platz zur Verfügung steht, da die ersten beiden Endstücke 1A, 1B nicht in den Innenraum des Leitungsschachts 80 hineinragen.

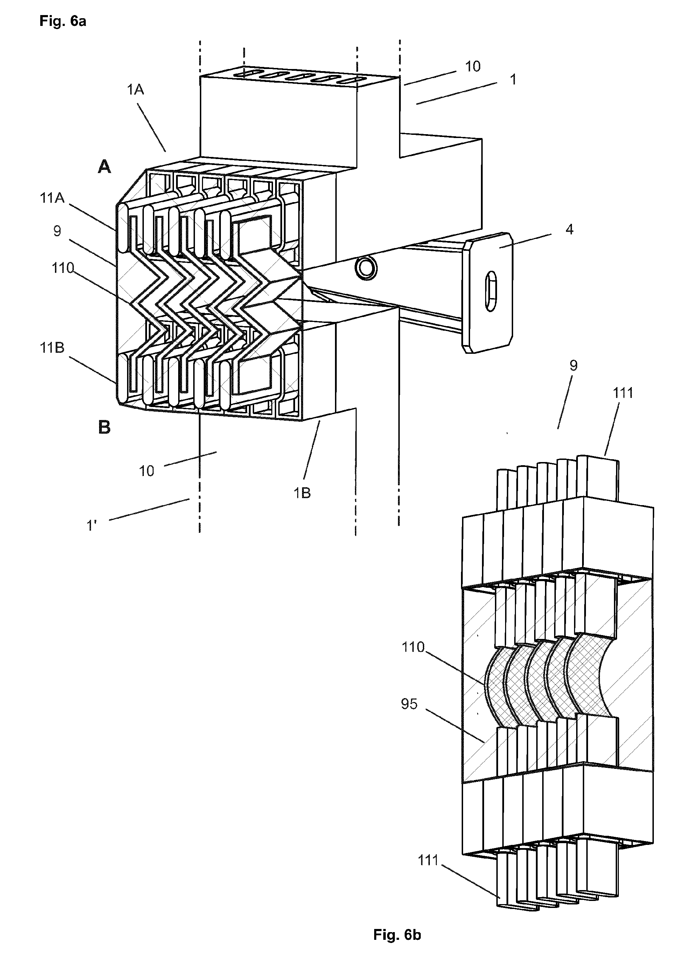

Fig. 6a zeigt eine Stromschienenkupplung 9 mit deformierbaren, gegebenenfalls federelastischen elektrischen Leitern 110, durch die die Anschlüsse 11A, 11B benachbarter Anschlussbereiche A, B der Stromschienen 1, 1' von Fig. 4 oder 5 miteinander verbindbar sind. Die gefertigte Stromschienenkupplung 9 ist zudem vergossen.

In Fig. 6b zeigt eine modulare Stromschienenkupplung 9 mit deformierbaren, gegebenenfalls federelastischen elektrischen Leitern 110, die in die Stromschienenkupplung 9 integriert, in eine elastische Gussmasse 95 eingebunden und mit Anschlüssen 111 versehen sind, die zu den Anschlüssen 11A, 11B der Stromschienen korrespondieren und daher einfach mit diesen verbunden werden können.

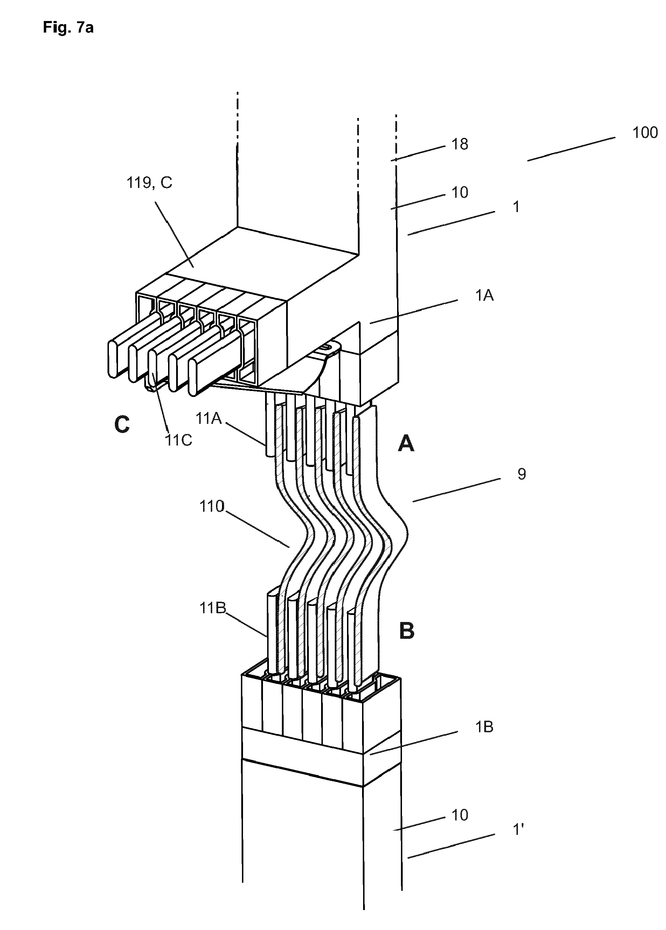

Fig. 7a zeigt Stromschienen 1, 1' mit gerade verlaufenden Endstücken 1A, 1B und Leitungsstäben 11 mit Anschlüssen 11A, 11B, die durch bandförmige elektrische Leiter 110, z.B. Laminate mit dünnen flexiblen Metallplatten, miteinander verbunden, verschweisst oder verschraubt sind.

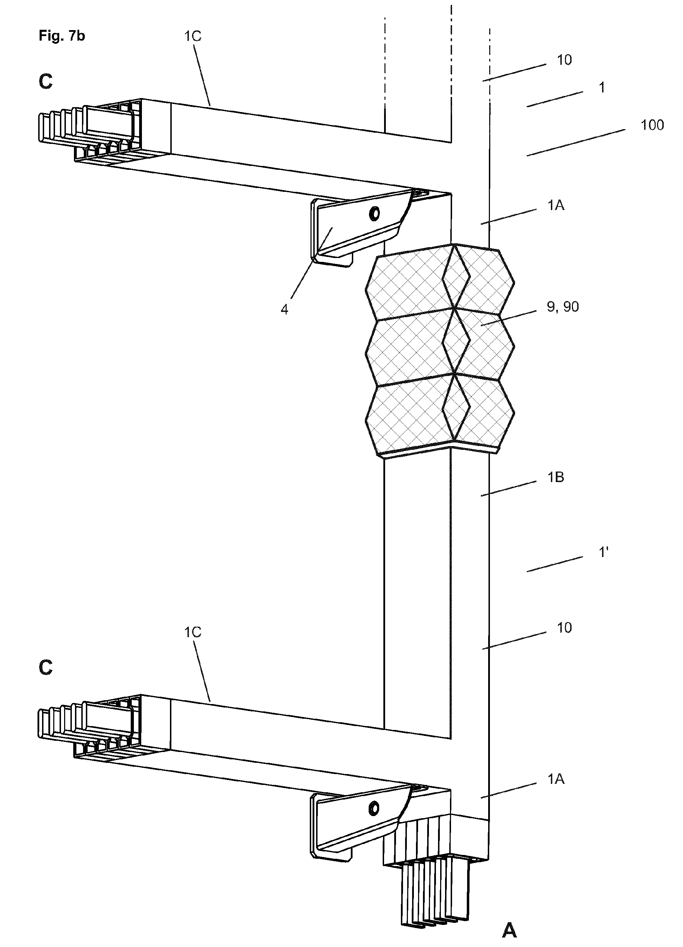

Fig. 7b zeigt die Stromschienen 1, 1' von Fig. 7a nach dem Verschliessen der Stromschienenkupplung 9 durch eine Kopplungshülse 90, die in der Ausgestaltung eines elastischen Balgs vorliegt, der vorzugsweise aus Metall gefertigt ist. Die Kopplungshülse 90 ist vorzugsweise mit dem oberen und dem unteren Endstück 1A, 1B fest verbunden, gegebenenfalls verschweisst, sodass die Stromschienenkupplung 9 zuverlässig abgedichtet ist.

Zusätzlich oder alternativ kann eine elastische Gussmasse 95 in die Kopplungshülse 90 eingeführt werden, welche die Kopplungshülse 90 in Position hält, die elektrischen Leiter 11, 110 gegeneinander isoliert und das Eindringen von Wasser verhindert.

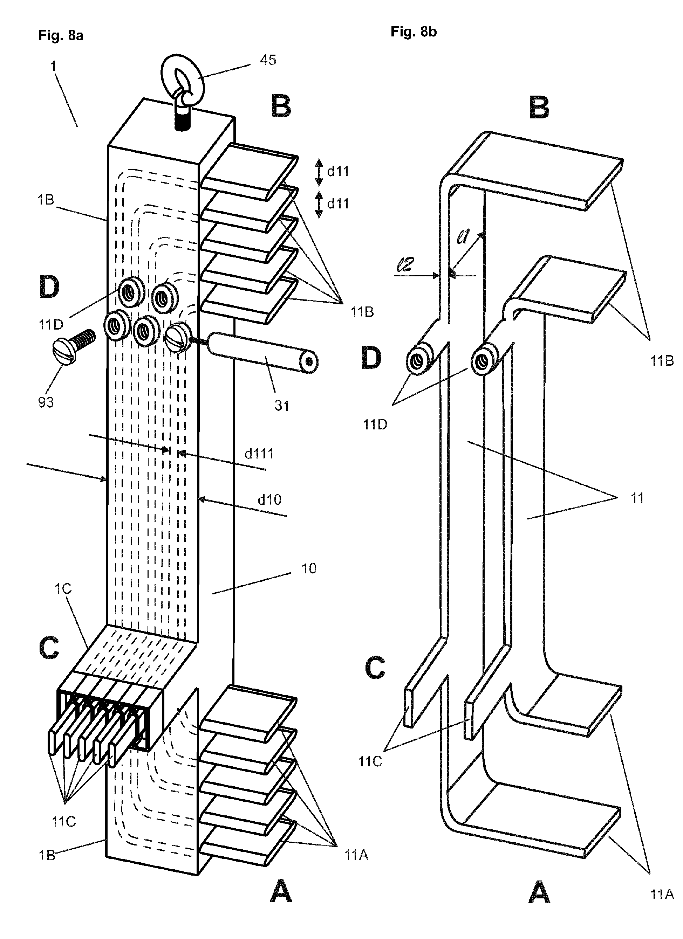

Fig. 8a zeigt eine vorzugsweise ausgestaltete Stromschiene 1 mit U-profilförmigen Leitungsstäben 11, die in gegenüberliegenden ersten und zweiten Endstücken 1A, 1B zu Anschlussbereichen A und B verlaufen und dort noch innerhalb des Stromschienenkörpers 10 um 90° in dieselbe Richtung umgebogen sind. Die Enden der Leitungsstäbe 11 mit den Anschlüssen 11A, 11B verlaufen parallel zueinander und treten seitlich aus dem Stromschienenkörper 10 hervor.

Zwischen den ersten beiden Endstücken 1A, 1B ist optional ein drittes Endstück 1C mit Anschlüssen 11C in einem dritten Anschlussbereich C und dritten Anschlüssen 11C vorgesehen. Diese wurden vor dem Giessen einstückig mit den Leitungsstäben 11 verbunden oder mit diesen verschweisst oder verschraubt. Dieser dritte Anschlussbereich C wurde zum ersten Anschlussbereich A hin verschoben.

Beim zweiten Anschlussbereich B ist wiederum optional ein vierter Anschlussbereich D mit fünf Anschlüssen bzw. Anschlussstutzen 11D vorgesehen, in die Anschlussschrauben 93 einsetzbar sind. Mittels der Anschlussschrauben 93 können Anschlusskabel bzw. deren Kabelschuhe 31 fest gezogen werden. Die die vierten Anschlüsse 11D werden vorzugsweise im Stromschienenkörper 10 versenkt, sodass sie mit geringem Aufwand vergossen werden können.

Wahlweise kann die Stromschiene 1 daher ohne die Anschlussbereiche C und D oder mit Anschlussbereich C und/oder D gefertigt werden. Die Anschlussbereiche C und/oder D werden zentrisch oder exzentrisch auf derselben oder auf gegenüberliegenden Seiten vorgesehen.

Fig. 8b zeigt den ersten und den fünften Leitungsstab 11 der Stromschiene 1 von Fig. 8a, die in diesem Ausführungsbeispiel einstückig miteinander verbundene erste, zweite sowie optionale dritte und vierte Anschlüsse 11A, 11B bzw. 11C, 11D aufweisen.

Die Leitungsstäbe 11, die einen zumindest annähernd rechteckförmigen Querschnitt mit einer längeren Rechteckseite 11 und einer kürzeren Rechteckseite 12 können in einfacher Weise gefertigt, d.h. zugeschnitten und gebogen werden. Die Biegung erfolgt um eine Biegeachse, die parallel zur Längsachse der Stromschiene und parallel zur längeren Rechteckseite 12 verläuft. In der Folge werden die Leitungsstäbe 11 in den Stromschienenkörper 10 eingegossen.

In Fig. 8a sind die Abstände d11 zwischen den einzelnen Anschlüssen 11A, 11B gezeigt, die in einem weiten Bereich unabhängig vom Durchmesser d10 des Stromschienenkörpers 10 frei wählbar sind. Die Anschlüsse 11A, 11B können daher derart beabstandet werden, dass sie bequem mit den Anschlüssen einer anschliessenden Stromschiene verbunden werden können. Ein Auffächern der Anschlüsse 11A, 11B ist nicht notwendig.

Ferner kann die Stromschiene 1 an der Unterseite und der Oberseite mit Montageelementen 45, wie Haken oder dergleichen, versehen werden, sodass sie vorteilhaft gehandhabt, z.B. mit einem Kran gehalten und senkrecht in einen Schacht abgesenkt werden kann.

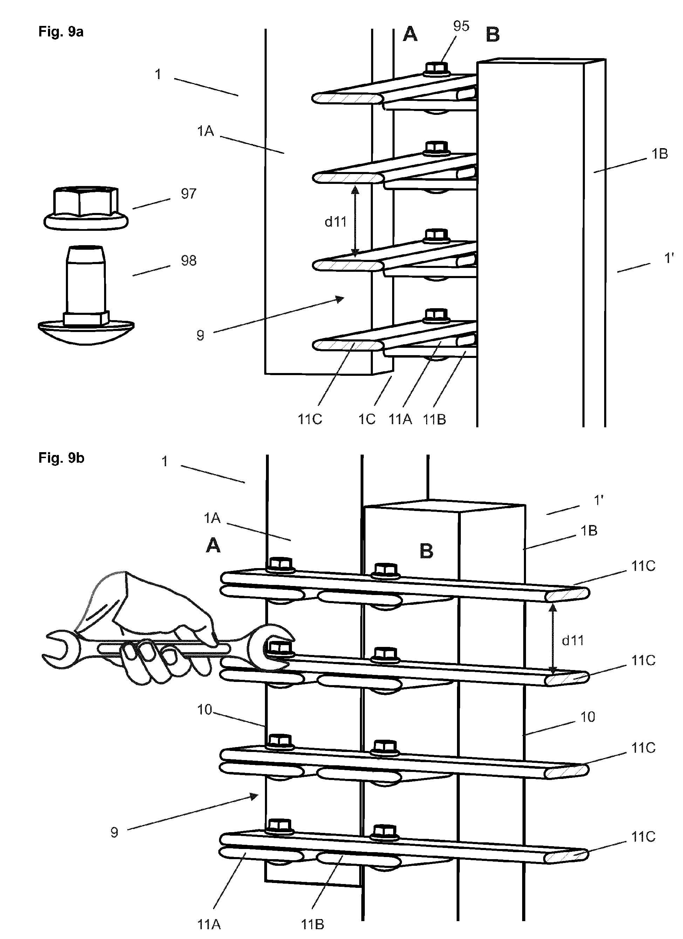

Fig. 9a zeigt zwei miteinander verbundene Stromschienen 1, 1' gemäss Fig. 8a, deren erste bzw. zweite Anschlüsse 11A, 11B, die gegeneinander gerichtet sind, miteinander sowie mit dritten Anschlüssen 11C verbunden sind. Nach dem Vergiessen der Stromschienenkupplung 9 resultiert eine zusammengesetzte Stromschiene mit zwei äusseren Anschlussbereichen A und B (nicht gezeigt) und einem dritten Anschlussbereich C mit den dritten Anschlüssen 11C. Fig. 9a zeigt ferner eine Schraube 98 und eine Schraubenmutter 97, durch die Anschlüsse 11A, 11B und 11C miteinander verbunden werden können.

Fig. 9b zeigt zwei nebeneinander und überlappend angeordnete Stromschienen 1, 1', deren erste bzw. zweite Anschlüsse 11A, 11B, die parallel zueinander ausgerichtet sind, miteinander sowie mit dritten Anschlüssen 11C verbunden sind. Aufgrund des relativ gross gewählten Abstands d11 zwischen den Anschlüssen 11A bzw. 11B kann mit einem Werkzeug bequem eingegriffen werden. Besonders vorteilhaft ist auch, dass die Anschlüsse 11A, 11B und 11C dem Installateur zugewandt sind. Die Stromschienenkörper 10 liegen parallel aneinander an und können vorteilhaft miteinander verbunden werden. Z.B. weisen die Stromschienenkörper 10 zueinander komplementäre Formteile auf, die ineinander verschoben werden können und einander formschlüssig halten. In diesem Falle können die Stromschienen 1 ohne weitere Verbindungsmittel modular zusammengesetzt werden.

Die Anschlüsse 11C, die in den Figuren 9a und 9b in Schnittdarstellung gezeigt sind, sind z.B. die Anschlüsse einer Stromschiene 1C bzw. eines Stromschienenastes, der aus dem Leitungsschacht 80 hinaus in einen Gebäuderaum geführt wird (siehe Fig. 3). Alternativ können die dritten Anschlüsse 11C auch als Anschlusskontakte oder Kabelschuhe dienen, die mit flexiblen Leitungen 31 verbunden sind (siehe Figur 8a, Anschlussbereich D). Alle Anschlüsse 11A, 11B, 11C werden in der Folge vergossen, so dass eine dicht abgeschlossene Stromschienenkreuzung oder ein dicht abgeschlossener Abschlusskopf bzw. Abschlusszwischenkopf mit Leitungen 31 resultiert (siehe Fig. 2).

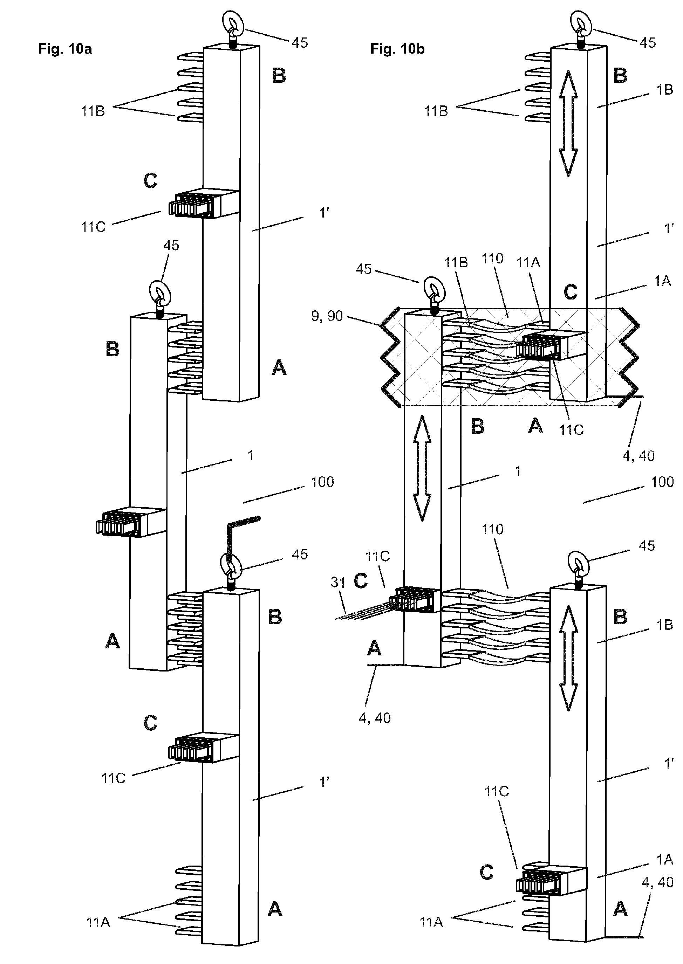

Fig. 10a zeigt ein erfindungsgemässes Stromschienensystem 100 mit Stromschienen 1, 1', deren Anschlüsse 11A, 11B, wie in Fig. 8a gezeigt, direkt und fest miteinander verbunden sind. Die Stromschienen 1, 1' sind mit Montageelementen 45 versehen, mittels denen die Stromschienen 1, 1' transportiert und/oder fixiert werden können. Die Montageelemente können auch am Stromschienenkörper 10 angeformt sein. Die dritten Anschlussbereiche C können, wie gezeigt, in der Mitte der Stromschienen 1, 1' oder auch exzentrisch angeordnet sein, falls mit Temperaturdehnungen zu rechnen ist. In diesem Fall wird z.B. die Ausgestaltung von Fig. 10b realisiert. Die Verbindung der Anschlüsse 11A, 11B und gegebenenfalls zusätzlichen Anschlüssen 11C erfolgt z.B. wie in Fig. 9a gezeigt.

Fig. 10b zeigt ein erfindungsgemässes Stromschienensystem 100 mit Stromschienen 1, 1' gemäss Fig. 8a, deren Anschlüsse 11A, 11B durch elastische Leiter 110 miteinander verbunden sind. Die Stromschienen 1, 1' sind auf Ausleger 4 oder gemauerte Elemente 40 abgestützt. An die dritten Anschlüsse 11C der Stromschienen 1, 1' sind weitere Stromschienen oder Anschlusskabel 31 abschliessbar. Ferner ist schematisch gezeigt, dass die oberen beiden Stromschienen 1, 1' durch eine Stromschienenkupplung 9 miteinander verbunden sind, die einen dehnbaren Balg 90 aufweist, in den vorzugsweise eine elastische Gussmasse eingefügt ist.

Fig. 11 zeigt eine erfindungsgemässe Stromschiene 1 mit vier Leitungsstäben 11, die unten und oben axial aus den Endstücken 1A, 1B nach aussen treten und ausserhalb des Stromschienenkörpers 10 um 90° in dieselbe Richtung gebogen sind und in den Anschlussbereichen A und B parallel zueinander verlaufen. Diese Stromschiene 1 weist dieselben Vorteile auf, wie die Stromschiene von Fig. 8a. Da der Stromschienenkörper 10 jedoch verkürzt ist, sind die Anschlüsse 11A, 11B leichter zugänglich und können auch kürzer ausgebildet sein. Ferner können die freiliegenden elektrischen Leiter 11 bereits mit einer Elastizität versehen werden, die es erlaubt, auftretende Temperaturdehnungen zu kompensieren. Die Anschlüsse 11A, 11B der Stromschiene von Fig. 8a und Fig. 11 können auch in entgegengesetzte Richtungen gebogen sein, sodass die Leitungsstäbe S- oder Z-förmig ausgebildet sind. Die strichpunktierte Linie symbolisiert den verlängerten Stromschienenkörper 10` von Fig. 8a. Durch Wahl der entsprechenden Matrize kann daher wahlweise die Stromschiene 1 von Fig. 8a oder von Fig. 11 gefertigt werden.

Fig. 11 zeigt ferner, dass die Anschlüsse 11A, 11B mit ersten und zweiten Bohrungen 99 und 990 versehen sind. Die ersten Bohrungen 99 dienen der Aufnahme von Schrauben 98 mittels denen die Stromschiene 1 mit einer benachbarten Stromschiene 1' verbindbar ist. Die zweiten Bohrungen 93 dienen der Aufnahme von Anschlussschrauben 93, mittels denen Anschlusskabel 31 bzw. damit verbundene Kabelschuhe festgeschraubt werden können. Die ersten und zweiten Anschlüsse 11A, 11B dienen daher zusätzlich als dritte bzw. vierte Anschlüsse 11C, 11D.

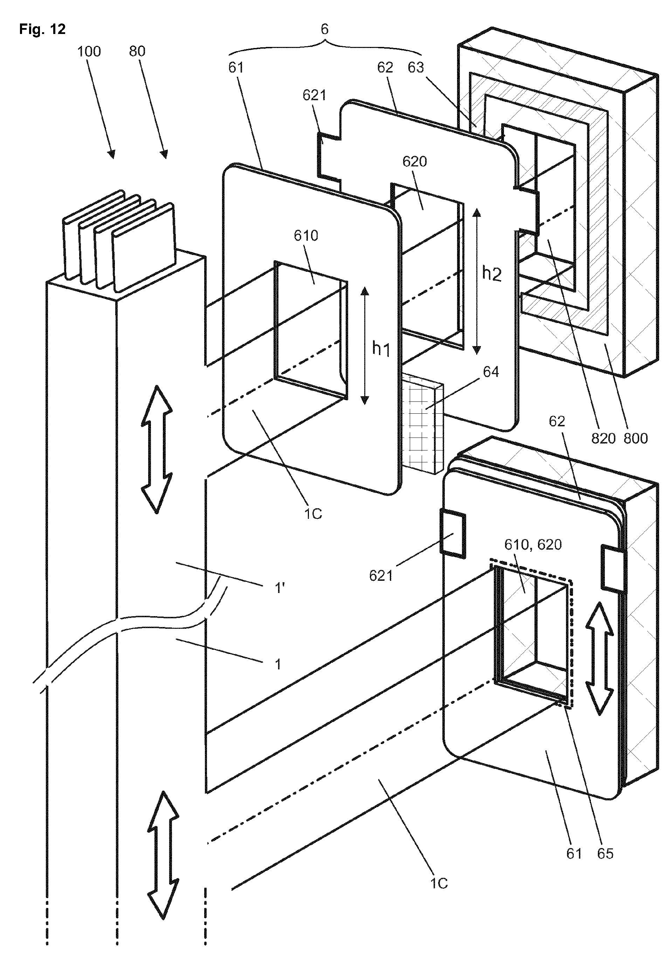

Fig. 12 zeigt schematisch und exemplarisch einen Teil des Stromschienensystems 100 von Fig. 3 mit zwei je an einer Maueröffnung 820 anliegenden Mauerdichtungen 6, die eine erste und zweite Dichtungsplatte 61, 62 aufweisen. Die Dichtungsplatten 61, 62, die je eine erste bzw. zweite Durchtrittsöffnung 610; 620 aufweisen, sind gegeneinander verschiebbar, vorzugsweise verschiebbar gehalten.

Z.B. weist wenigstens eine der Dichtungsplatten 61 oder 62 wenigstens ein Flanschelement 621 auf, mittels dessen die benachbarte Dichtungsplatte 62 bzw. 61 umklammert und verschiebbar gehalten werden kann. Sofern eine andere Verbindungsart vorgesehen ist, können die Flanschelemente 621 der zweiten Dichtungsplatte 62 auch mit Bohrungen versehen sein, durch die Montageschrauben in die Schachtwand 800 eingedreht werden können. Alternativ können auch andere Mittel, wie rechteckige Klammern oder Hülsen oder weitere Verbindungselemente, vorgesehen sein, mittels denen beide Dichtungsplatten 61, 62 gegeneinander verschiebbar gehalten werden. Die Dichtungsplatten 61, 62 sind aus einem wärmeresistenten bzw. feuerfesten Material gefertigt, welches verhindert, dass Wärme in den Leitungsschacht 80 eintreten oder durch die Maueröffnungen 820 aus dem Leitungsschacht 80 austreten kann.

In einer besonders bevorzugten Ausgestaltung ist zwischen den beiden Dichtungsplatten 61, 62 wenigstens eine vorzugsweise feuerfeste Isolationsschicht 64 vorgesehen, welche ebenfalls eine Durchtrittsöffnung aufweist. Die vorzugsweise dehnbare und komprimierbare Isolationsschicht 64 ist vorzugsweise mit beiden Dichtungsplatten 61, 62 verbunden, vorzugsweise verklebt, sodass die beiden Dichtungsplatten 61, 62 durch die Isolationsschicht 64 elastisch miteinander verbunden und gegeneinander verschiebbar sind. Die Mauerdichtungen 6 können daher aus Einzelteilen 61, 62, und 64 zusammengesetzt werden oder bilden vorzugsweise eine Einheit und können in dieser Konfiguration besonders einfach eingesetzt werden.

Genannte isolierende Materialien, wie die Dichtungsplatten 61, 62 bestehen vorzugsweise aus Keramik, einem verfestigten Produkt aus Keramikfaserwolle oder Keramikfasern oder Metall. Die Isolationsschicht 64 besteht vorzugsweise aus Keramikfaserwolle oder Keramikfasern und weist vorzugsweise eine Dicke im Bereich von 1 cm bis 10 cm auf. Durch diese Dimensionierung können die beiden Dichtungsplatten 61, 62 um das hier erforderliche Mass gegeneinander verschoben werden. Dem Fachmann sind weitere feuerfeste elastische oder auch starre feuerfeste Materialien bekannt.

Die erste und zweite Durchtrittsöffnung 610, 620 sind vorzugsweise derart dimensioniert, dass ein Teil des Stromschienensystems 100, wie ein Endstück 1C einer Stromschiene 1, 1' oder eine gesamte Stromschiene 1, 1' oder ein Kabelpaket, hindurch geführt werden kann und in der ersten Durchtrittsöffnung 610 vorzugsweise spielfrei gehalten ist. Die zweite Durchtrittsöffnung 620 ist grösser dimensioniert als die erste Durchtrittsöffnung 610 und erlaubt es somit, das durchgeführte und von der ersten Dichtungsplatte 61 gehaltene Teil des Stromschienensystems 100 zumindest vertikal nach unten und nach oben zu verschieben, sodass Temperaturdehnungen des Stromschienensystems 100 durch Verschiebung der ersten Dichtungsplatte 61 aufgenommen werden können, während die Maueröffnung 820 dicht abgeschlossen bleibt, an der die zweite Dichtungsplatten 62 vorzugsweise fest montiert anliegt. Die zweite Dichtungsplatte 62 kann mit der Mauer verschraubt oder durch eine Klebstoffschicht 63 verbunden werden.

Die beiden Durchtrittsöffnungen 610, 620 weisen vorzugsweise eine identische Breite, aber unterschiedliche Höhen h1, h2 auf, sodass eine vertikalen Verschiebung der Teile 1C des Stromschienensystems 100 möglich ist, wie dies durch Pfeile in Fig. 12 symbolisiert ist.

Die erste Durchtrittsöffnung 610 weist vorzugsweise denselben Querschnitt auf, wie das hindurchgeführte Teil 1C des Stromschienensystems 100. Sofern hingegen ein Spiel vorgesehen ist bzw. Spalten verbleiben, so können diese durch eine Adapterplatte 65 oder eine Dichtungsmasse 65 dicht abgeschlossen werden.

Mittels der Mauerdichtungen 6 werden die Maueröffnungen dicht abgeschlossen, sodass der Leitungsschacht 80 im Brandfall im Bereich der Maueröffnungen 820 keine Schwächen aufweist und Wärme durch die Maueröffnungen 820 nicht in den Leitungsschacht 80 hinein oder aus dem Leitungsschacht 80 hinaus gelangen kann. Das Stromschienensystem 100 kann daher auch starr, d.h. ohne elastische Verbindungselemente, aufgebaut werden und erhält durch die flexiblen Mauerdichtungen 6 den erforderlichen Spielraum für Temperaturdehnungen. Innerhalb des Leitungsschachtes 80 können daher Anschlusskästen vollständig vermieden werden, weshalb innerhalb des Leitungsschachtes 80 eine praktisch optimale Leitungsqualität auch im Brandfall garantiert werden kann.

### Literaturverzeichnis

[1] Produktkatalog "Niederspannungs-Schienenverteiler LANZ HE 2.5.2" der LANZ OENSINGEN AG vom September 2009
[2] EP1928066A2,
[3] Produktkatalog von Eta-com: "Cast Resin Insulated Busway System", 27.11.2014
[4] D. Nelles und Ch. Tuttas, Elektrische Energietechnik, Leitfaden der Elektrotechnik, Teubner Verlag, Stuttgart 1977, Seite 187
[5] Marcel Schöb, »Power über Stromschiene oder Kabel?«, Wahl der geeigneten Energietransportverbindungen beim Bau von Industrieanlagen, Elektrotechnik 1/10, (http://www.elektrotechnik.ch)
[6] EP2107659A1
[7] E-LINE MK Busbar Systems 100-160-225A, www.eae.com.tr
[8] E. Vinaricky, Elektrische Kontakte, Werkstoffe und Anwendungen: Grundlagen, Technologien, Prüfverfahren, Springer Verlag, 2. Auflage, März 2002

## Patentansprüche

1. Stromschienensystem (100) zur Energieverteilung mit wenigstens einer ersten und einer zweiten Stromschiene (1, 1') mit in einen Stromschienenkörper (10) eingebetteten Leitungsstäben (11), die von einem ersten Anschlussbereich (A) an einem ersten Endstück (1A) der Stromschiene (1, 1') zu wenigstens einem zweiten Anschlussbereich (B) an einem zweiten Endstück (1B) der Stromschiene (1) geführt und endseitig mit Anschlüssen (11A, 11B) versehen sind, **dadurch gekennzeichnet, dass** die beiden Stromschienen (1, 1') durch eine Stromschienenkupplung (9) miteinander verbunden sind, die wenigstens einen deformierbaren elektrischen Leiter (110) aufweist, durch den die Anschlüsse (11A, 11B) der einander zugewandten Stromschienen (1, 1') derart miteinander verbunden sind, dass Temperaturdehnungen der Stromschienen (1, 1') kompensierbar sind.

2. Stromschienensystem (100) nach Anspruch 1, **dadurch gekennzeichnet, dass** der wenigstens eine elastische elektrische Leiter (110) als elastischer Metallbügel oder als Metallband ausgebildet ist, das gegebenenfalls eine Laminatstruktur mit mehreren metallenen Lagen aufweist.

3. Stromschienensystem (100) nach Anspruch 1 oder 2, **dadurch gekennzeichnet, dass** die Leitungsstäbe (11) Z- oder U-förmig ausgebildet sind und
a) den Stromschienenkörper (10) axial vollständig durchlaufen; oder
b) mit den Anschlüssen (11A, 11B) senkrecht zur Längsachse (x) der Stromschiene (1) aus dem Stromschienenkörper (10) herausragen.

4. Stromschienensystem (100) nach Anspruch 3, **dadurch gekennzeichnet, dass** die Z- oder U-förmig ausgebildeten Leitungsstäbe (11) aus einer Platte ausgeschnitten oder gegossen sind oder dass die Z- oder U-förmig ausgebildeten Leitungsstäbe (11) durch einen Biegevorgang geformt wurden.

5. Stromschienensystem (100) nach einem der Ansprüche 1 - 4, **dadurch gekennzeichnet, dass** wenigstens eine der beiden miteinander verbundenen Stromschienen (1, 1') wenigstens ein drittes Endstück (1C) mit einem dritten Anschlussbereich (C) aufweist, das vorzugsweise exzentrisch auf der Seite eines der beiden Endstücke (1A, 1B) der zugehörigen Stromschiene (1, 1') angeordnet ist.

6. Stromschienensystem (100) nach einem der Ansprüche 1 - 5, **dadurch gekennzeichnet, dass** die miteinander gekoppelten und in der Stromschienenkupplung (9) vergossenen Anschlüsse (1A, 1B) der beiden Stromschienen (1, 1') mit einer dritten Stromschiene oder mit Anschlusskabeln (31) verbunden sind, die ein drittes Endstück (1C) der miteinander verbundenen ersten und zweiten Stromschiene (1, 1') bildet.

7. Stromschienensystem (100) nach einem der Ansprüche 1 - 6, **dadurch gekennzeichnet, dass** eine Kopplungshülse (90) vorgesehen ist, welche die Stromschienenkupplung (9) überdeckt und auf jeder Seite mit dem zugehörigen Endstück (1A, 1B) der betreffenden Stromschiene (1, 1') vorzugsweise durch eine Schweissnaht, eine Gussverbindung, eine Rastvorrichtung oder eine formschlüssige Pressverbindung dicht abschliessend verbunden ist.

8. Stromschienensystem (100) nach Anspruch 7, **dadurch gekennzeichnet, dass** die Kopplungshülse (90) als Balg ausgebildet ist und/oder dass die Kopplungshülse (90) mit einer elastischen Dichtungsmasse, vorzugsweise einer Silikonmasse zumindest teilweise gefüllt ist.

9. Gebäudeinstallation (1000) mit Stromschienen (1), die miteinander verbunden, verschraubt oder verschweisst ein Stromschienensystem (100) bilden, zur Energieverteilung in einem Gebäude (8), in dem ein vertikal ausgerichteter Leitungsschacht (80) mit Maueröffnungen (820) in wenigstens einer Schachtwand (800) vorgesehen ist, durch die von den Stromschienen (1) abgezweigte elektrische Leitungen (1C, 31) in einen vom Leitungsschacht (80) getrennten Raum des Gebäudes (8) zu einem Energieabnehmer oder Energieverteiler (21, ..., 24) geführt sind, **dadurch gekennzeichnet, dass** die abgezweigten elektrischen Leitungen (1C) als Stromschienen (1C) oder Kabel (31) ausgebildet sind, die einstückig oder durch Stromschienenkupplungen (9) mit geschraubten und vergossenen elektrischen Verbindungen in das Stromschienensystem (100) eingebunden sind.

10. Gebäudeinstallation (1000) nach Anspruch 9, **dadurch gekennzeichnet, dass** an wenigstens einer der Maueröffnungen (820) eine Mauerdichtung (6) anliegt, die wenigstens zwei gegeneinander verschiebbare erste und zweite Dichtungsplatten (61, 62) aufweist, von denen
a) die erste Dichtungsplatte (61) eine erste Durchtrittsöffnung (610) aufweist, durch die ein aus dem Leitungsschacht (80) hinaus geführtes Teil (1C) des Stromschienensystems (100) vorzugsweise dicht abgeschlossen hindurchgeführt ist, und
b) die zwischen der ersten Dichtungsplatte (61) und der Maueröffnung (820) angeordnete und mit der Schachtwand (800) verbundene zweite Dichtungsplatte (62) eine zweite Durchtrittsöffnung (620) aufweist, innerhalb der das aus dem Leitungsschacht (80) hinaus geführte Teil (1C) des Stromschienensystems (100) vertikal verschiebbar hindurchgeführt ist,
so dass bei Temperaturdehnungen, die innerhalb des Stromschienensystems (100) auftreten, das aus dem Leitungsschacht (80) hinaus geführte Teil (1C) des Stromschienensystems (100) innerhalb der Maueröffnung (820) verschiebbar und die Maueröffnung (820) stets dicht abgeschlossen ist.

11. Gebäudeinstallation (1000) nach Anspruch 9 oder 10, **dadurch gekennzeichnet, dass** die aus dem Leitungsschacht (80) hinausgeführten dritten Endstücke (1C) der Stromschienen (1, 1') oder die aus dem Leitungsschacht (80) hinausgeführten mit einer Stromschienenkupplung (9) verbundenen Stromschienen (1C) innerhalb des Leitungsschachts (80) je von einer Stütze (4) oder einem Element der Schachtmauer (40) vorzugsweise neben zugehörigen Maueröffnung (820) auf konstanter Höhe gehalten sind.

12. Gebäudeinstallation (1000) nach Anspruch 9, 10 oder 11, **dadurch gekennzeichnet, dass** die Stromschienen (1, 1') Z- oder U-förmig ausgebildet Leitungsstäbe (11) aufweisen.

13. Gebäudeinstallation (1000) nach einem der Ansprüche 9 - 12 mit einem Stromschienensystem (100) nach einem der Ansprüche 1-8, **dadurch gekennzeichnet, dass** innerhalb des Leitungsschachts (80) wenigstens zwei Stromschienen (1, 1`) durch eine Stromschienenkupplung (9) miteinander verbunden sind, die wenigstens einen deformierbaren elektrischen Leiter (110) aufweist, durch den die Anschlussbereiche (A, B) der einander zugewandten Stromschienen (1, 1') derart miteinander verbunden sind, dass Temperaturdehnungen der Stromschienen (1, 1') kompensierbar sind.

14. Gebäudeinstallation (1000) nach einem der Ansprüche 9-12, **dadurch gekennzeichnet, dass** innerhalb des Leitungsschachts (80) nur vergossene Teile der Stromschienen (1) und vergossene Stromschienenkupplungen (9) vorgesehen sind, die zur gegenseitigen Verbindung der Stromschienen (1, 1`, 1") vorgesehen sind.

15. Gebäudeinstallation (1000) einem der Ansprüche 9-14, **dadurch gekennzeichnet, dass** innerhalb wenigstens eines der Gebäuderäume die Leitungsstäbe (11) der Anschlussbereiche (C) der dritten Endstücke (1C) mit Anschlusskabeln (31) verschweisst oder verschraubt und eingegossen sind.
